# EUROPEAN PATENT APPLICATION

(11) **EP 4 722 730 A1**
(43) Date of publication of application: **08.04.2026**
(21) Application number: 24819000.1
(22) Date of filing: 26.03.2024
(51) Int. Cl.: G01N 35/02, G01N 1/38

(54) **AUTOMATED ANALYSIS DEVICE AND CONTROL METHOD FOR SAME**

(30) Priority: 05.06.2023 JP 2023092432
(71) Applicant: HITACHI HIGH-TECH CORPORATION, Tokyo 105-6409 (JP)
(72) Inventor: SUGIYAMA, Yoshikazu, Tokyo 100-8280 (JP); TSUNASHIMA, Kenta, Tokyo 105-6409 (JP); TANAKA, Yuto, Tokyo 105-6409 (JP); SUGINO, Fumiya, Tokyo 105-6409 (JP)
(74) Representative: MERH-IP Matias Erny Reichl Hoffmann Patentanwälte PartG mbB
(86) International application number: PCT/JP2024/012129
(87) International publication number: WO 2024/252761

(57) **Abstract**

An object of the present invention is to provide an automatic analyzer capable of generating ultrasonic waves from different piezoelectric elements without reducing the intensity of the ultrasonic waves. Therefore, the present invention provides an automatic analyzer including: a piezoelectric element configured to generate ultrasonic waves for stirring a sample and a reagent; an amplifier configured to drive the piezoelectric element; a relay switch provided between the piezoelectric element and the amplifier; and a control unit configured to control the amplifier and the relay switch. When a first piezoelectric element is driven, the control unit turns on a positive voltage-side switch and a GND-side switch in a first relay switch provided between the first piezoelectric element and the amplifier, and turns off a positive voltage-side switch and a GND-side switch in a second relay switch provided between a second piezoelectric element and the amplifier, and when the second piezoelectric element is driven, the control unit turns on the positive voltage-side switch and the GND-side switch in the second relay switch, and turns off the positive voltage-side switch and the GND-side switch in the first relay switch.

## Description

### Technical Field

The present invention relates to an automatic analyzer and a control method thereof.

### Background Art

In an automatic analyzer, a technique is used in which a sample and a reagent in a reaction container are stirred in a non-contact manner by irradiating ultrasonic waves. In order to generate the ultrasonic waves, a piezoelectric element in the automatic analyzer is driven by an amplifier. For example, Patent Literature 1 discloses an automatic analyzer in which an amplifier applies a voltage to one or more of a plurality of split electrodes provided in a piezoelectric element to drive the piezoelectric element and generate sound waves. Further, Patent Literature 1 also discloses that a relay group is controlled to connect the split electrodes to the amplifier and connect a thermostatic water side electrode to the ground during a stirring operation.

### Citation List

### Patent Literature

PTL 1: JP2021-196329A

### Summary of Invention

### Technical Problem

The thermostatic water side electrode in Patent Literature 1 is switched to either a state of being connected to the ground or a state of being connected to an impedance measurement circuit for abnormality detection. Further, in the technique disclosed in Patent Literature 1, only one piezoelectric element is assumed to be driven. However, in a case where there are a plurality of piezoelectric elements and only some of the piezoelectric elements are driven, if the thermostatic water side electrodes of the other piezoelectric elements are also connected to the ground, a leakage current flows from the thermostatic water side electrodes of some of the piezoelectric elements to the thermostatic water side electrodes of the other piezoelectric elements via thermostatic water. As a result, all of the output current of the amplifier cannot be supplied to some of the piezoelectric elements, and there is a problem that the intensity of the ultrasonic waves decreases.

An object of the present invention is to provide an automatic analyzer capable of generating ultrasonic waves from different piezoelectric elements without reducing the intensity of the ultrasonic waves.

### Solution to Problem

In order to solve the above-described problem, the present invention provides an automatic analyzer including: a piezoelectric element configured to generate ultrasonic waves; an amplifier configured to drive the piezoelectric element; a relay switch provided between the piezoelectric element and the amplifier; and a control unit configured to control the amplifier and the relay switch, in which when a, first piezoelectric element is driven, the control unit turns on a positive voltage-side switch and a GND-side switch in a first relay switch provided between the first piezoelectric element and the amplifier, and turns off a positive voltage-side switch and a GND-side switch in a second relay switch provided between a second piezoelectric element and the amplifier, and when the second piezoelectric element is driven, the control unit turns on the positive voltage-side switch and the GND-side switch in the second relay switch, and turns off the positive voltage-side switch and the GND-side switch in the first relay switch.

### Advantageous Effects of Invention

According to the present invention, it is possible to provide an automatic analyzer capable of generating ultrasonic waves from different piezoelectric elements without reducing the intensity of the ultrasonic waves.

### Brief Description of Drawings

[FIG. 1] FIG. 1 is a diagram illustrating a schematic configuration of an automatic analyzer according to Embodiment 1.
[FIG. 2] FIG. 2 is a diagram illustrating a configuration of a stirring unit, and an amplifier and a control unit connected thereto.
[FIG. 3] FIG. 3 is a top view illustrating a positional relationship between reaction containers and piezoelectric elements in a thermostatic tank of the automatic analyzer according to Embodiment 1.
[FIG. 4A] FIG. 4A is a diagram illustrating a circuit configuration for driving a piezoelectric element of an automatic analyzer according to a comparative example (when only a first piezoelectric element is driven).
[FIG. 4B] FIG. 4B is a diagram illustrating a circuit configuration for driving a piezoelectric element of the automatic analyzer according to the comparative example (when only a second piezoelectric element is driven).
[FIG. 5A] FIG. 5A is a diagram illustrating a circuit configuration for driving a piezoelectric element of the automatic analyzer according to Embodiment 1 (when only a first piezoelectric element is driven).
[FIG. 5B] FIG. 5B is a diagram illustrating a circuit configuration for driving a piezoelectric element of the automatic analyzer according to Embodiment 1 (when only a second piezoelectric element is driven).
[FIG. 6] FIG. 6 is a time chart illustrating an operation when the plurality of piezoelectric elements are driven in the automatic analyzer according to Embodiment 1.
[FIG. 7] FIG. 7 is a top view illustrating a positional relationship between reaction containers and piezoelectric elements in a thermostatic tank of an automatic analyzer according to Embodiment 2.
[FIG. 8A] FIG. 8A is a diagram illustrating a circuit configuration for driving a piezoelectric element of the automatic analyzer according to Embodiment 2 (when only a first piezoelectric element is driven).
[FIG. 8B] FIG. 8B is a diagram illustrating a circuit configuration for driving a piezoelectric element of the automatic analyzer according to Embodiment 2 (when only a third piezoelectric element is driven).
[FIG. 8C] FIG. 8C is a diagram illustrating a circuit configuration for driving a piezoelectric element of the automatic analyzer according to Embodiment 2 (when only a second piezoelectric element is driven).
[FIG. 8D] FIG. 8D is a diagram illustrating a circuit configuration for driving a piezoelectric element of the automatic analyzer according to Embodiment 2 (when only a fourth piezoelectric element is driven).
[FIG. 9] FIG. 9 is a time chart illustrating an overall operation of stirring by each piezoelectric element.
[FIG. 10] FIG. 10 is a time chart illustrating an operation when the first piezoelectric element and the third piezoelectric element are driven within a certain stirring time in the automatic analyzer according to Embodiment 2.
[FIG. 11] FIG. 11 is a time chart illustrating an operation when the second piezoelectric element and the fourth piezoelectric element are driven within a certain stirring time in the automatic analyzer according to Embodiment 2.
[FIG. 12] FIG. 12 is a-diagram illustrating a circuit configuration for driving a piezoelectric element of an automatic analyzer according to Embodiment 3 (when only a first piezoelectric element is driven).
[FIG. 13] FIG. 13 is a diagram illustrating a circuit configuration for driving a piezoelectric element of an automatic analyzer according to Embodiment 4 (when only a first piezoelectric element is driven).

### Description of Embodiments

Hereinafter, embodiments of the invention will be described with reference to the drawings.

### [Embodiment 1]

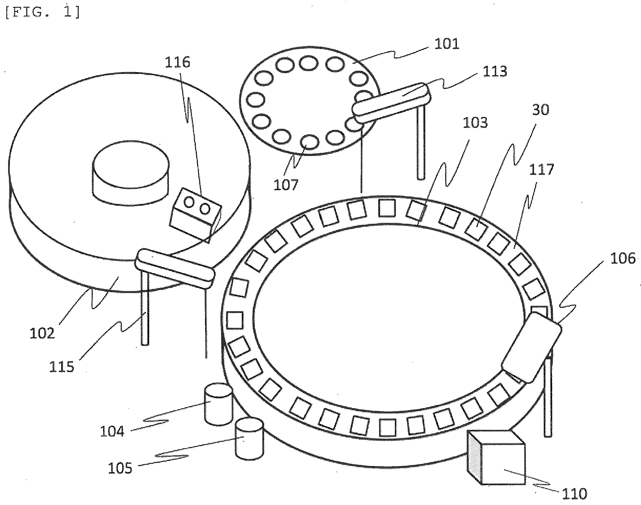

FIG. 1 is a schematic configuration diagram of an automatic analyzer according to Embodiment 1. As illustrated in FIG. 1, the automatic analyzer includes a sample storage unit 101, a reagent storage unit 102, a reaction unit 103, stirring units 104 and 105, an analysis unit 110, a washing unit 106, a sample dispensing mechanism 113, and a reagent dispensing mechanism 115. Although not illustrated in FIG. 1, the automatic analyzer further includes a control unit 4 (a host computer) including an electronic circuit and a storage device, and the control unit 4 controls an operation of each unit and each mechanism.

A sample container such as a test tube is stored in the sample storage unit 101, and a sample 107 is placed in the sample container. The reaction unit 103 includes a rotatable reaction disk, and reaction containers 30 (reaction cells) are arranged circumferentially on the reaction disk. The reaction disk includes a thermostatic tank that holds thermostatic water at a specified temperature, and the reaction container 30 is kept at a predetermined temperature by the thermostatic water circulating in the thermostatic tank being in contact with the reaction container 30. The sample dispensing mechanism 113 aspirates an amount of the sample 107 required for analysis from the sample container, and dispenses the aspirated sample 107 into the reaction container 30 on the reaction unit 103. The reagent dispensing mechanism 115 aspirates an amount of reagent 116 required for analysis from the reagent storage unit 102, and dispenses the aspirated reagent 116 into the reaction container 30. A plurality of stirring units 104 and 105 are provided side by side on an outer circumferential side of the reaction disk, and agitate the sample 107 and the reagent 116 dispensed into the reaction container 30, respectively. The analysis unit 110 performs component analysis by measuring an absorbance of a reaction liquid of the sample 107 and the reagent 116 in which a reaction is promoted. The washing unit 106 washes the reaction container 30 after the measurement of the absorbance is completed. The next sample 107 is dispensed by the sample dispensing mechanism 113 into the reaction container 30 washed by the washing unit 106, and a similar sequence is repeated thereafter.

Here, the stirring units 104 and 105 irradiate the reaction container 30 with ultrasonic waves, and stir the sample 107 and the reagent 116 in a non-contact manner by using vibration, acoustic flow, acoustic radiation pressure, and the like. By providing a plurality of stirring units, the sample 107 and the reagent 116 can be efficiently stirred to achieve a high processing capacity. In the present embodiment, the thermostatic water is used as a liquid medium for sound waves, and water other than the thermostatic water or a liquid other than water may also be used. When vibration or the like is applied to the sample 107 and the reagent 116, sound waves other than ultrasonic waves may be used.

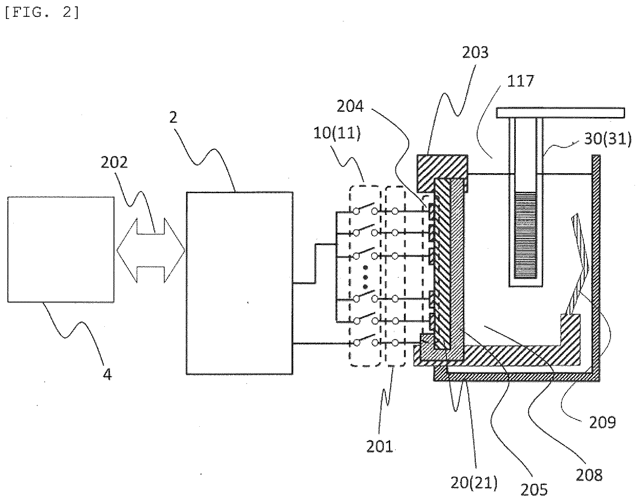

FIG. 2 is a diagram illustrating a configuration of a stirring unit, and an amplifier and a control unit connected thereto. FIG. 2 mainly illustrates a vertical cross section of the stirring unit 104 along a radial direction of the reaction unit 103. In the following, the stirring unit 104 will be described as an example, and the same applies to the stirring unit 105.

As illustrated in FIG. 2, the stirring unit 104 includes a piezoelectric element 20 (first piezoelectric element 21) that generates ultrasonic waves, a jig 203 for attaching the piezoelectric element 20 to a thermostatic tank (water tank) 117, a reflection plate 209 that reflects the ultrasonic waves transmitted through the reaction container 30 or the like toward the reaction container 30 (first reaction container 31), and a connector 201 that electrically connects the piezoelectric element 20 to an amplifier 2 side. The piezoelectric element 20 includes a split electrode 204 (a positive voltage-side electrode) that is provided on one surface (an air side surface) and is in contact with air, and a thermostatic water side electrode 205 (a negative voltage-side electrode) that is provided on the other surface (a thermostatic water side surface) and is in contact with thermostatic water 208. A part of the thermostatic water side electrode 205 is folded back to the air side surface along a lower end surface of the piezoelectric element 20.

The split electrode 204 is divided into a plurality of electrodes at different height positions. In the present embodiment, an example in which 13 split electrodes are provided (only some are illustrated in FIG. 2 and the like) will be described, and the number of split electrodes is not limited to 13. Each split electrode is connected to a corresponding pin of the connector 201 in a one-to-one correspondence.

The amplifier 2 is provided with an interface unit 202 connected to the control unit 4, and the control unit 4 controls the amplifier 2 via the interface unit 202. The amplifier 2 is connected to the stirring unit 104 via the connector 201. Further, a relay group 10 (first relay switch 11) is disposed between the amplifier 2 and the connector 201. The relay group 10 includes a plurality of switches, and opening and closing of each switch is controlled by a command from the control unit 4. That is, the relay group 10 functions as a switch device that switches connection between the amplifier 2 and each split electrode 204 and between the amplifier 2 and the thermostatic water side electrode 205.

The control unit 4 detects a liquid level position (liquid level height) of a liquid in the reaction container 30. Further, the control unit 4 selects one or more split electrodes 204 at appropriate positions in accordance with the liquid level position, and controls the relay group 10 to apply a voltage to the selected split electrodes 204. In this way, a position at which the reaction container 30 is irradiated with ultrasonic waves is adjusted.

As described above, the control unit 4 of the present embodiment applies the voltage to each split electrode 204 via the amplifier 2. When the voltage is applied to each split electrode 204, the piezoelectric element 20 is driven to generate the ultrasonic waves.

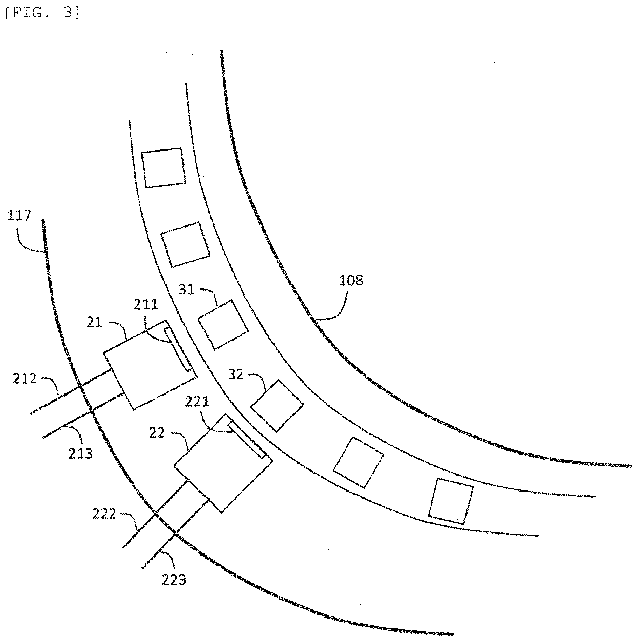

FIG. 3 is a top view illustrating a positional relationship between reaction containers and piezoelectric elements in a thermostatic tank of the automatic analyzer according to Embodiment 1. As illustrated in FIG. 3, the plurality of reaction containers including the first reaction container 31 and a second reaction container 32 are arranged in a circumferential direction in the thermostatic tank 117, and a turntable 108 of a reaction disk is provided on an inner diameter side thereof. As the turntable 108 rotates, the reaction containers to be stirred sequentially move in the circumferential direction.

A first vibration plate 211 is provided on a side surface on an inner diameter side of the first piezoelectric element 21. The first vibration plate 211 is bonded to a GND electrode (negative voltage-side electrode) of the first piezoelectric element 21, is in contact with the thermostatic water in the thermostatic tank 117, and faces the first reaction container 31. The GND electrode is connected to the amplifier 2 via a GND electrode-side terminal 213 and a GND-side switch 112 to be described later. Further, a split electrode (positive voltage electrode) of the first piezoelectric element 21 is connected to the amplifier 2 via a split electrode-side terminal 212 and a split-side switch 111 to be described later.

A second piezoelectric element 22 is located adjacent to the first piezoelectric element 21 in the circumferential direction. A second vibration plate 221 is provided on a side surface on an inner diameter side of the second piezoelectric element 22. The second vibration plate 221 is bonded to a GND electrode (negative voltage-side electrode) of the second piezoelectric element 22, is in contact with the thermostatic water in the thermostatic tank 117, and faces the second reaction container 32. The GND electrode is connected to the amplifier 2 via a GND electrode-side terminal 223 and a GND-side switch 122 to be described later. Further, a split electrode (positive voltage electrode) of the second piezoelectric element 22 is connected to the amplifier 2 via a split electrode-side terminal 222 and a split-side switch 121 to be described later.

Next, a circuit configuration for driving the piezoelectric elements will be described. Before describing the circuit configuration of the automatic analyzer according to Embodiment 1, a circuit configuration of an automatic analyzer according to a comparative example will be described.

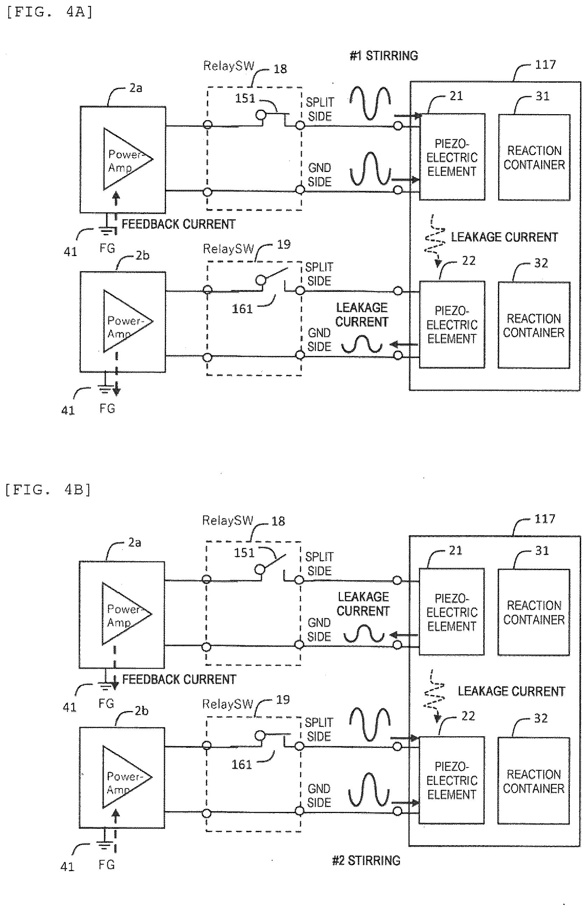

FIGS. 4A and 4B are diagrams illustrating the circuit configuration for driving piezoelectric elements of the automatic analyzer according to a comparative example, in which FIG. 4A illustrates a case where only a first piezoelectric element is driven, and FIG. 4B illustrates a case where only a second piezoelectric element is driven.

A first relay switch 18 is provided between the first piezoelectric element 21 and a first amplifier 2a, and a second relay switch 19 is provided between the second piezoelectric element 22 and a second amplifier 2b. The first relay switch 18 includes only a split-side switch 151 that turns on/off connection between a split electrode of the first piezoelectric element 21 and the first amplifier 2a. The second relay switch 19 includes only a split-side switch 161 that turns on/off connection between a split electrode of the second piezoelectric element 22 and the second amplifier 2b.

First, as illustrated in FIG. 4A, when driving only the first piezoelectric element 21, the control unit turns on the split-side switch 151 of the first relay switch 18 and turns off the split-side switch 161 of the second relay switch 19. Then, a voltage is applied to the split electrode of the first piezoelectric element 21 by the first amplifier 2a so as to drive the first piezoelectric element 21. However, since a GND electrode of the first piezoelectric element 21 and the first vibration plate 211 bonded to the GND electrode and in contact with thermostatic water are not insulated from a high drive voltage, the first vibration plate 211 has a potential. Therefore, a leakage current flows from the first vibration plate 211 of the first piezoelectric element 21 to the second vibration plate 221 of the second piezoelectric element 22 via the thermostatic water. The leakage current flows to a frame GND terminal 41 of the second amplifier 2b via the second relay switch 19. Since the frame GND terminal 41 is also connected to the first amplifier 2a, a feedback loop of the leaked current is formed. That is, since a part of an output current of the first amplifier 2a leaks and returns, all of the output current of the first amplifier 2a cannot be supplied to the first piezoelectric element 21, and the intensity of the ultrasonic waves decreases.

Next, as illustrated in FIG. 4B, when driving only the second piezoelectric element 22, the control unit turns on the split-side switch 161 of the second relay switch 19 and turns off the split-side switch 151 of the first relay switch 18. Then, a voltage is applied to the split electrode of the second piezoelectric element 22 by the second amplifier 2b, and the second piezoelectric element 22 is driven. However, since a GND electrode of the second piezoelectric element 22 and the second vibration plate 221 bonded to the GND electrode and in contact with the thermostatic water are not insulated from the high drive voltage, the second vibration plate 221 has a potential. Therefore, a leakage current flows from the second vibration plate 221 of the second piezoelectric element 22 to the first vibration plate 211 of the first piezoelectric element 21 via the thermostatic water. The leakage current flows to the frame GND terminal 41 of the first amplifier 2a via the first relay switch 18. Since the frame GND terminal 41 is also connected to the second amplifier 2b, a feedback loop of the leaked current is formed. That is, since a part of the output current of the second amplifier 2b leaks and returns, all of the output current of the second amplifier 2b cannot be supplied to the second piezoelectric element 22, and the intensity of the ultrasonic waves decreases.

Further, in the comparative example, the first amplifier 2a for driving the first piezoelectric element 21 and the second amplifier 2b for driving the second piezoelectric element 22 are separately provided. Therefore, due to the component variation of the two amplifiers, a difference occurs in the characteristics of the ultrasonic waves, and thus the analysis accuracy may be affected.

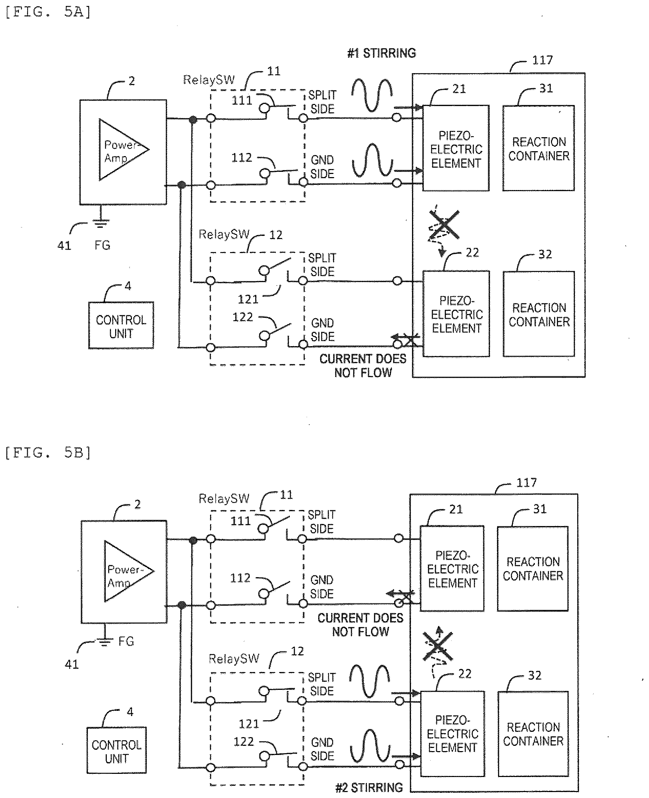

Next, the circuit configuration of the automatic analyzer according to Embodiment 1 will be described. FIGS. 5A and 5B are diagrams illustrating the circuit configuration for driving the piezoelectric elements of the automatic analyzer according to Embodiment 1, in which FIG. 5A illustrates a case where only the first piezoelectric element is driven, and FIG. 5B illustrates a case where only the second piezoelectric element is driven.

In Embodiment 1, since the first piezoelectric element 21 and the second piezoelectric element 22 are driven by one common amplifier 2, unlike the comparative example, the influence of the component variation of the amplifier can be eliminated.

The first relay switch 11 is provided between the first piezoelectric element 21 and the amplifier 2, and a second relay switch 12 is provided between the second piezoelectric element 22 and the amplifier 2. The first relay switch 11 includes the split-side switch 111 (positive voltage-side switch) that turns on/off the connection between the split electrode (positive voltage-side electrode) of the first piezoelectric element 21 and a positive-side output electrode of the amplifier 2, and the GND-side switch 112 (negative voltage-side switch) that turns on/off the connection between the GND electrode (negative voltage-side electrode) of the first piezoelectric element and a negative-side output electrode of the amplifier 2. The second relay switch 12 includes the split-side switch 121 (positive voltage-side switch) that turns on/off the connection between the split electrode (positive voltage-side electrode) of the second piezoelectric element 22 and the positive-side output electrode of the amplifier 2, and the GND-side switch 122 (negative voltage-side switch) that turns on/off the connection between the GND electrode (negative voltage-side electrode) of the second piezoelectric element and the negative-side output electrode of the amplifier 2.

First, as illustrated in FIG. 5A, when driving only the first piezoelectric element 21, the control unit 4 turns on the split-side switch 111 and the GND-side switch 112 of the first relay switch 11 and turns off the split-side switch 121 and the GND-side switch 122 of the second relay switch 12. Then, since the voltage is applied to the split electrode of the first piezoelectric element 21 by the amplifier 2, and the first piezoelectric element 21 is driven, ultrasonic vibration is transmitted into the first reaction container 31, and the sample and the reagent are stirred. At this time, since the GND electrode of the first piezoelectric element 21 and the first vibration plate 211 bonded to the GND electrode and in contact with thermostatic water are not insulated from the high drive voltage, the first vibration plate 211 has a potential. However, since the GND-side switch 122 of the second relay switch 12 is OFF, the GND electrode bonded to the second vibration plate 221 of the second piezoelectric element 22 and the negative-side output electrode of the amplifier 2 are not electrically connected, and a feedback loop through which a leakage current flows is not formed. As a result, all of the output current of the amplifier 2 can be supplied to the first piezoelectric element 21, and a decrease in the intensity of the ultrasonic waves can be suppressed.

Next, as illustrated in FIG. 5B, when driving only the second piezoelectric element 22, the control unit 4 turns on the split-side switch 121 and the GND-side switch 122 of the second relay switch 12, and turns off the split-side switch 111 and the GND-side switch 112 of the first relay switch 11. Then, since the voltage is applied to the split electrode of the second piezoelectric element 22 by the amplifier 2, and the second piezoelectric element 22 is driven, the ultrasonic vibration is transmitted into the second reaction container 32, and the sample and the reagent are stirred. At this time, since the GND electrode of the second piezoelectric element 22 and the second vibration plate 221 bonded to the GND electrode and in contact with the thermostatic water are not insulated from the high drive voltage, the second vibration plate 221 has a potential. However, since the GND-side switch 112 of the first relay switch 11 is OFF, the GND electrode bonded to the first vibration plate 211 of the first piezoelectric element 21 and the negative-side output electrode of the amplifier 2 are not electrically connected, and a feedback loop through which a leakage current flows is not formed. As a result, all of the output current.of the amplifier 2 can be supplied to the second piezoelectric element 22, and a decrease in the intensity of the ultrasonic waves can be suppressed.

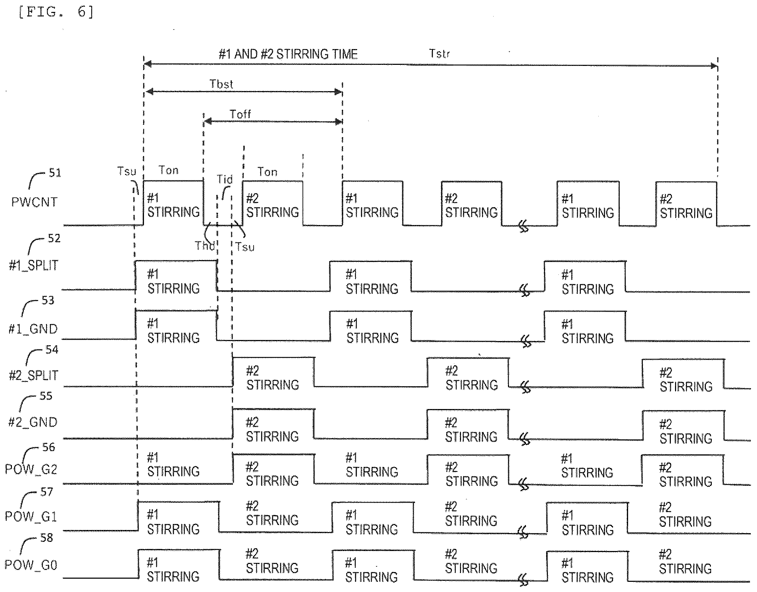

Next, an operation when the amplifier 2 drives the first piezoelectric element 21 and the second piezoelectric element will be described. FIG. 6 is a time chart illustrating an operation when the plurality of piezoelectric elements are driven in the automatic analyzer according to Embodiment 1.

The control unit 4 turns on/off the output of the amplifier 2 by a PWCNT (51) that is a power control signal, outputs a voltage for driving the piezoelectric element when the PWCNT (51) = H, and does not output the drive voltage when the PWCNT (51) = L. The control unit 4 outputs #1_splitting (52) that is a signal for turning on/off the split-side switch 111 of the first relay switch 11, #1_GND (53) that is a signal for turning on/off the GND-side switch 112 of the first relay switch 11, #2_splitting (54) that is a signal for turning on/off the split-side switch 121 of the second relay switch 12, and #2_GND (55) that is a signal for turning on/off the GND-side switch 122 of the second relay switch 12. Further, the control unit 4 outputs gain control POW_G2 (56), gain control POW_G1 (57), and gain control POW_G0 (58) as 3-bit gain control signals. A minimum gain is POW_G2 (56) = H, POW_G1 (57) = H, gain control POW_G0 (58) = H, that is, 7 in a decimal number, and a maximum gain is POW_G2 (56) = L, POW_G1 (57) = L, gain control POW_G0 (58) = L, that is, 0 in the decimal number. At the time of #1 stirring in which the first piezoelectric element 21 is driven, POW_G2 (56) = L, POW_G1 (57) = H, and gain control POW_G0 (58) = H, that is, a gain setting value = 3 (decimal number). At the time of #2 stirring in which the second piezoelectric element 22 is driven, POW_G2 (56) = H, POW_G1 (57) = L, and gain control POW_G0 (58) = L, that is, the gain setting value = 4 (decimal number).

As illustrated in FIG. 6, first, in order to drive only the first piezoelectric element 21', the control unit 4 sets #1_splitting (52) and #1_GND (53) to H, sets #2_splitting (54) and #2_GND (55) to L, and sets the gain control signals to POW_G2 (56) = L, POW_G1 (57) = H, and POW_G0 (58) = H. In this state, after a setup time Tsu (for example, 2 msec) has elapsed, the control unit 4 sets PWCNT (51) to H, causes the amplifier 2 to output the drive voltage, and drives the first piezoelectric element 21.

Here, in order to stir the sample and the reagent in the reaction container by the ultrasonic vibration, it is necessary to output a burst signal to the piezoelectric element and generate a swirling flow in the liquid in the reaction container. Therefore, the control unit 4 repeats turning the drive voltage on/off at a predetermined duty ratio until a certain stirring time Tstr (for example, 2 sec) has elapsed.

When a predetermined time Ton has elapsed after PWCNT (51) = H (after the output of the amplifier 2 is turned on), the control unit 4 sets PWCNT (51) = L (turns off the output of the amplifier 2). Further, when a hold time Thd (for example, 2 msec) during which a contact make state (ON) of the first relay switch 11 is maintained has elapsed, the control unit 4 sets #1_splitting (52) and #1_GND (53) to L, and ends the driving of the first piezoelectric element 21.

Thereafter, when a switch idle time Tid (for example, 4 msec) during which both the first relay switch 11 and the second relay switch 12 are in a contact break state (OFF) has elapsed, the control unit 4 sets #2_splitting (54) and #2_GND (55) to H in order to drive only the second piezoelectric element 22. Further, when the setup time Tsu has elapsed, the PWCNT (51) is set to H, the drive voltage is output from the amplifier 2, and the second piezoelectric element 22 is driven.

When the predetermined time Ton has elapsed after PWCNT (51) = H (after the output of the amplifier 2 is turned on), the control unit 4 sets PWCNT (51) = L (turns off the output of the amplifier 2). Further, when the hold time Thd has elapsed, the control unit 4 sets #2_splitting (54) and #2_GND (55) to L, and ends the driving of the second piezoelectric element 22.

Thereafter, the first piezoelectric element 21 is driven again, and the similar operation is repeated until the stirring time Tstr is reached.

In FIG. 6, Tbst is one cycle of the burst signal, Ton is ON time, Toff is OFF time, and the duty ratio is Ton/Tbst. Here, by setting both the duty ratios of the first piezoelectric element 21 and the second piezoelectric element 22 to less than 50%, while one piezoelectric element is OFF, the other piezoelectric element can be turned on, and a processing capability is improved. Although depending on the size of the reaction container and the amount of liquid, in consideration of the efficiency of stirring, it is desirable to set the duty ratio to about 30%, and for example, Tbst is set to 50 msec, Ton is set to 15 msec, and Toff is set to 35 msec. Note that Tbst, Ton, and Toff are the same time in the first piezoelectric element 21 and the second piezoelectric element 22.

As described above, since both the first piezoelectric element 21 and the second piezoelectric element 22 are driven in a time division manner, the stirring in the first reaction container 31 by the first piezoelectric element 21 and the stirring in the second reaction container 32 by the second piezoelectric element 22 can be performed in parallel within the certain stirring time Tstr. In the present embodiment, an example in which two piezoelectric elements are driven in the time division manner with a multiplex number = 2 has been described, but n piezoelectric elements (n being three or more) may be driven in a time division manner with a multiplex number = m (n ≥ m). In this case, at least m piezoelectric elements of the n piezoelectric elements are driven at a duty ratio of less than 100/m% in the time division manner, so that the m reaction containers can be stirred within a certain stirring time.

### [Embodiment 2]

Next, an automatic analyzer according to Embodiment 2 will be described. In Embodiment 1, a total of two piezoelectric elements of the first piezoelectric element 21 and the second piezoelectric element 22 are driven, but in Embodiment 2, a total of four piezoelectric elements that are the first piezoelectric element 21, the second piezoelectric element 22, a third piezoelectric element 23, and a fourth piezoelectric element are driven. Since the configuration for driving the first piezoelectric element 21 and the second piezoelectric element 22 among the four piezoelectric elements in Embodiment 2 is similar to that in Embodiment 1, the description thereof will be appropriately omitted below.

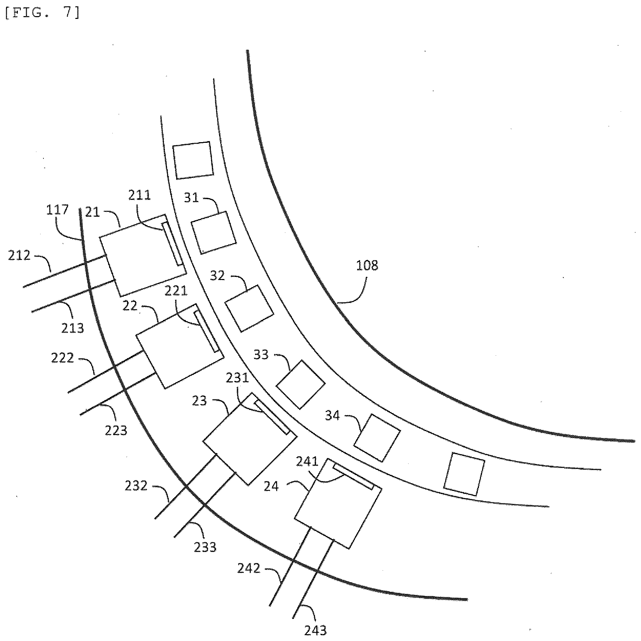

FIG. 7 is a top view illustrating a positional relationship between reaction containers and piezoelectric element in a thermostatic tank of an automatic analyzer according to Embodiment 2. As illustrated in FIG. 7, a plurality of reaction containers including the first reaction container 31, the second reaction container 32, a third reaction container 33, and a fourth reaction container 34 are arranged in a circumferential direction in the thermostatic tank 117, and the turntable 108 of a reaction disk is provided on an inner diameter side thereof. As the turntable 108 rotates, the reaction containers to be stirred sequentially moves in the circumferential direction.

The third piezoelectric element 23 is located adjacent to the second piezoelectric element 22 in the circumferential direction. A third vibration plate 231 is provided on a side surface on an inner diameter side of the third piezoelectric element 23. The third vibration plate 231 is bonded to a GND electrode (negative voltage-side electrode) of the third piezoelectric element 23, is in contact with thermostatic water in the thermostatic tank 117, and faces the third reaction container 33. The GND electrode is connected to the amplifier 2 via a GND electrode-side terminal 233 and a GND-side switch 132 to be described later. Further, a split electrode (positive voltage electrode) of the third piezoelectric element 23 is connected to the amplifier 2 via a split electrode-side terminal 232 and a split-side switch 131 to be described later.

The fourth piezoelectric element 24 is located adjacent to the third piezoelectric element 23 in the circumferential direction. A fourth vibration plate 241 is provided on a side surface on an inner diameter side of the fourth piezoelectric element 24. The fourth vibration plate 241 is bonded to a GND electrode (negative voltage-side electrode) of the fourth piezoelectric element 24, is in contact with the thermostatic water in the thermostatic tank 117, and faces the fourth reaction container 34. The GND electrode is connected to the amplifier 2 via a GND electrode-side terminal 243 and a GND-side switch 142 to be described later. Further, a split electrode (positive voltage electrode) of the fourth piezoelectric element 24 is connected to the amplifier 2 via a split electrode-side terminal 242 and a split-side switch 141 to be described later.

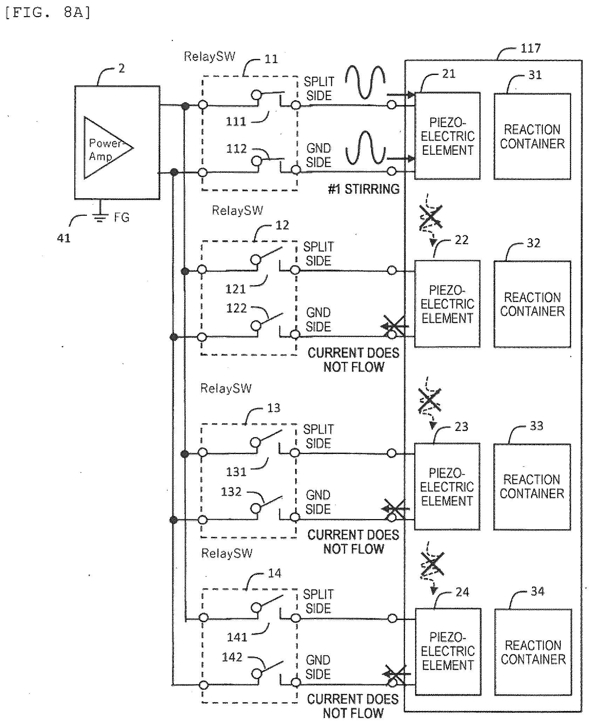

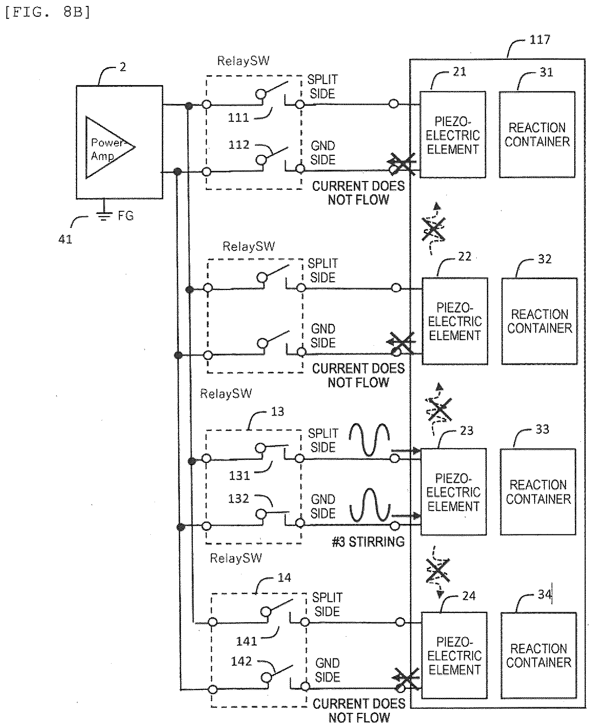

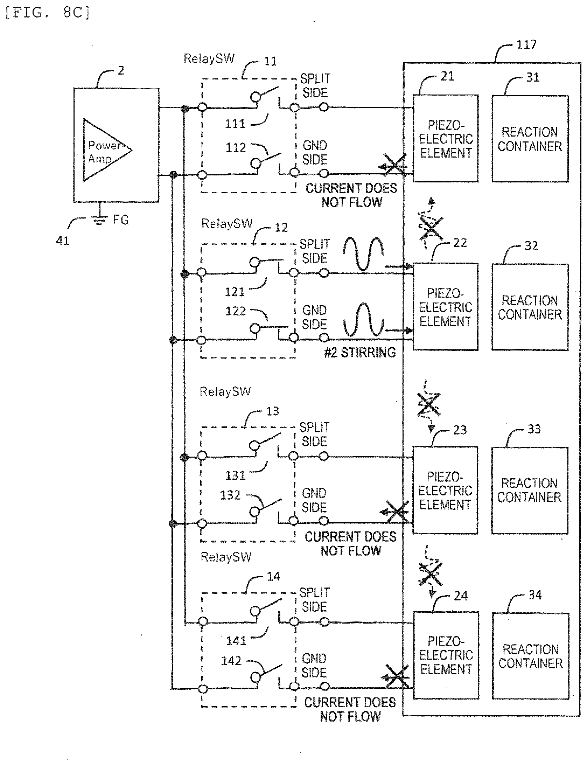

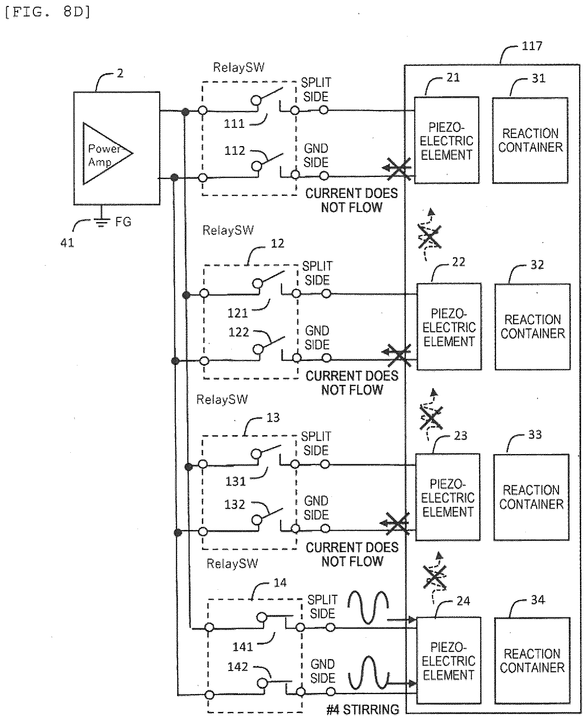

Next, a circuit configuration of the automatic analyzer according to Embodiment 2 will be described. FIGS. 8A to 8D are diagrams each illustrating a circuit configuration for driving the piezoelectric element of the automatic analyzer according to Embodiment 2, in which FIG. 8A illustrates a case where only the first piezoelectric element is driven, FIG. 8B illustrates a case where only the third piezoelectric element is driven, FIG. 8C illustrates a case where only the second piezoelectric element is driven, and FIG. 8D illustrates a case where only the fourth piezoelectric element is driven.

A third relay switch 13 is provided between the third piezoelectric element 23 and the amplifier 2, and a fourth relay switch 14 is provided between the fourth piezoelectric element 24 and the amplifier 2. The third relay switch 13 includes the split-side switch 131 (positive voltage-side switch) that turns on/off the connection between the split electrode (positive voltage-side electrode) of the third piezoelectric element 23 and a positive-side output electrode of the amplifier 2, and the GND-side switch 132 (negative voltage-side switch) that turns on/off the connection between the GND electrode (negative voltage-side electrode) of the third piezoelectric element and a negative-side output electrode of the amplifier 2. The fourth relay switch 14 includes the split-side switch 141 (positive voltage-side switch) that turns on/off the connection between the split electrode (positive voltage-side electrode) of the fourth piezoelectric element 24 and the positive-side output electrode of the amplifier 2, and the GND-side switch 142 (negative voltage-side switch) that turns on/off the connection between the GND electrode (negative voltage-side electrode) of the fourth piezoelectric element and the negative-side output electrode of the amplifier 2.

First, as illustrated in FIG. 8A, when driving only the first piezoelectric element 21, the control unit 4 turns on the split-side switch 111 and the GND-side switch 112 of the first relay switch 11, and turns off the split-side switch 121 and the GND-side switch 122 of the second relay switch 12, the split-side switch 131 and the GND-side switch 132 of the third relay switch 13, and the split-side switch 141 and the GND-side switch 142 of the fourth relay switch 14. Then, since the voltage is applied to the split electrode of the first piezoelectric element 21 by the amplifier 2, and the first piezoelectric element 21 is driven, ultrasonic vibration is transmitted into the first reaction container 31, and the sample and the reagent are stirred. At this time, the GND-side switch 122 of the second relay switch 12, the GND-side switch 132 of the third relay switch 13, and the GND-side switch 142 of the fourth relay switch 14 are OFF. Therefore, the GND electrodes of the second piezoelectric element 22, the third piezoelectric element 23, and the fourth piezoelectric element 24 are not electrically connected to the negative-side output electrode of the amplifier 2, and a feedback loop through which a leakage current flows is not formed. As a result, all of the output current of the amplifier 2 can be supplied to the first piezoelectric element 21, and a decrease in the intensity of the ultrasonic waves can be suppressed.

Next, as illustrated in FIG. 8B, when driving only the third piezoelectric element 23, the control unit 4 turns on the split-side switch 131 and the GND-side switch 132 of the third relay switch 13, and turns off the split-side switch 111 and the GND-side switch 112 of the first relay switch 11, the split-side switch 121 and the GND-side switch 122 of the second relay switch 12, and the split-side switch 141 and the GND-side switch 142 of the fourth relay switch 14. Then, since the voltage is applied to the split electrode of the third piezoelectric element 23 by the amplifier 2, and the third piezoelectric element 23 is driven, the ultrasonic vibration is transmitted into the third reaction container 33, and the sample and the reagent are stirred. At this time, the GND-side switch 112 of the first relay switch 11, the GND-side switch 122 of the second relay switch 12, and the GND-side switch 142 of the fourth relay switch 14 are OFF. Therefore, the GND electrodes of the first piezoelectric element 21, the second piezoelectric element 22, and the fourth piezoelectric element 24 are not electrically connected to the negative-side output electrode of the amplifier 2, and a feedback loop through which a leakage current flows is not formed. As a result, all of the output current of the amplifier 2 can be supplied to the third piezoelectric element 23, and a decrease in the intensity of the ultrasonic waves can be suppressed.

Further, as illustrated in FIG. 8C, when driving only the second piezoelectric element 22, the control unit 4 turns on the split-side switch 121 and the GND-side switch 122 of the second relay switch 12, and turns off the split-side switch 111 and the GND-side switch 112 of the first relay switch 11, the split-side switch 131 and the GND-side switch 132 of the third relay switch 13, and the split-side switch 141 and the GND-side switch 142 of the fourth relay switch 14. Then, since the voltage is applied to the split electrode of the second piezoelectric element 22 by the amplifier 2, and the second piezoelectric element 22 is driven, the ultrasonic vibration is transmitted into the second reaction container 32, and the sample and the reagent are stirred. At this time, the GND-side switch 112 of the first relay switch 11, the GND-side switch 132 of the third relay switch 13, and the GND-side switch 142 of the fourth relay switch 14 are OFF. Therefore, the GND electrodes of the first piezoelectric element 21, the third piezoelectric element 23, and the fourth piezoelectric element 24 are not electrically connected to the negative-side output electrode of the amplifier 2, and a feedback loop through which a leakage current flows is not formed. As a result, all of the output current of the amplifier 2 can be supplied to the second piezoelectric element 22, and a decrease in the intensity of the ultrasonic waves can be suppressed.

Further, as illustrated in FIG. 8D, when driving only the fourth piezoelectric element 24, the control unit 4 turns on the split-side switch 141 and the GND-side switch 142 of the fourth relay switch 14, and turns off the split-side switch 111 and the GND-side switch 112 of the first relay switch 11, the split-side switch 121 and the GND-side switch 122 of the second relay switch 12, and the split-side switch 131 and the GND-side switch 132 of the third relay switch 13. Then, since the voltage is applied to the split electrode of the fourth piezoelectric element 24 by the amplifier 2, and the fourth piezoelectric element 24 is driven, the ultrasonic vibration is transmitted into the fourth reaction container 34, and the sample and the reagent are stirred. At this time, the GND-side switch 112 of the first relay switch 11, the GND-side switch 122 of the second relay switch 12, and the GND-side switch 132 of the third relay switch 13 are OFF. Therefore, the GND electrodes of the first piezoelectric element 21, the second piezoelectric element 22, and the third piezoelectric element 23 are not electrically connected to the negative-side output electrode of the amplifier 2, and a feedback loop through which a leakage current flows is not formed. As a result, all of the output current of the amplifier 2 can be supplied to the fourth piezoelectric element 24, and a decrease in the intensity of the ultrasonic waves can be suppressed.

Next, an operation when the amplifier 2 drives the first piezoelectric element 21 to the fourth piezoelectric element 24 will be described.

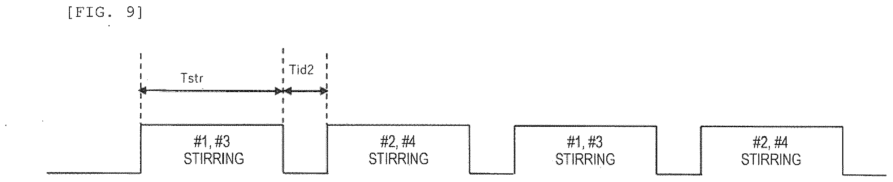

FIG. 9 is a time chart illustrating an overall operation of stirring by each piezoelectric element. In the present embodiment, among the four arranged piezoelectric elements, the first piezoelectric element 21 and every other third piezoelectric element 23 are driven until the stirring time Tstr has elapsed, and after a certain pause time Tid2, the second piezoelectric element 22 and every other fourth piezoelectric element 24 are driven. When the stirring of the first reaction container 31 to the fourth reaction container 34 by the first piezoelectric element 21 to the fourth piezoelectric element 24 is completed, the turntable rotates using a certain pause time Tid3, and the four reaction containers to be stirred next move to positions facing the respective piezoelectric elements.

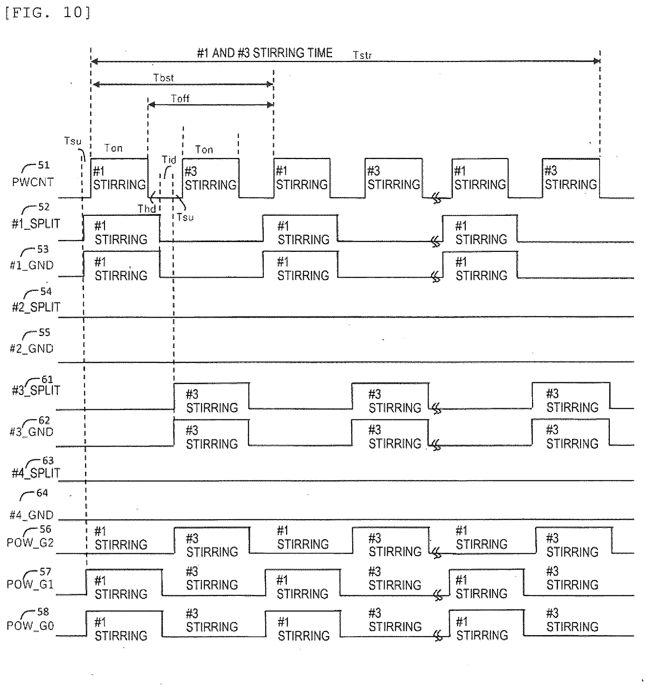

FIG. 10 is a time chart illustrating an operation when the first piezoelectric element and the third piezoelectric element are driven within a certain stirring time in the automatic analyzer according to Embodiment 2.

In addition to the signals similar to those of Embodiment 1, the control unit 4 of Embodiment 2 also outputs #3_splitting (61) that is a signal for turning on/off the split-side switch 131 of the third relay switch 13, #3_GND (62) that is a signal for turning on/off the GND-side switch 132 of the third relay switch 13, #4_splitting (63) that is a signal for turning on/off the split-side switch 141 of the fourth relay switch 14, and #4_GND (64) that is a signal for turning on/off the GND-side switch 142 of the fourth relay switch 14.

As illustrated in FIG. 10, first, in order to drive only the first piezoelectric element 21, the control unit 4 sets #1_splitting (52) and #1_GND (53) to H, sets #2_splitting (54), #2_GND (55), #3_splitting (61), #3_GND (62), #4_splitting (63), and #4_GND (64) to L, and sets the gain control signals to POW_G2 (56) = L, POW_G1 (57) = H, and POW_G0 (58) = H. In this state, after the setup time Tsu has elapsed, the control unit 4 sets PWCNT (51) = H, causes the amplifier 2 to output the drive voltage, and drives the first piezoelectric element 21.

When the predetermined time Ton has elapsed after PWCNT (51) = H, the control unit 4 sets PWCNT (51) = L. Further, when the hold time Thd has elapsed, the control unit 4 sets #1_splitting (52) and #1_GND (53) to L, and ends the driving of the first piezoelectric element 21.

Thereafter, when the switching idle time Tid has elapsed, the control unit 4 sets the #3_splitting (61) and the #3_GND (62) to H in order to drive only the third piezoelectric element 23. Further, when the setup time Tsu has elapsed, the PWCNT (51) is set to H, the drive voltage is output from the amplifier 2, and the third piezoelectric element 23 is driven.

When the predetermined time Ton has elapsed after PWCNT (51) = H, the control unit 4 sets PWCNT (51) = L. Further, when the hold time Thd has elapsed, the control unit 4 sets #3_splitting (61) and #3_GND (62) to L, and ends the driving of the third piezoelectric element 23.

Thereafter, the first piezoelectric element 21 is driven again, and the similar operation is repeated until the stirring time Tstr is reached. As described above, since both the first piezoelectric element 21 and the third piezoelectric element 23 are driven in a time division manner, the stirring in the first reaction container 31 by the first piezoelectric element 21 and the stirring in the third reaction container 33 by the third piezoelectric element 23 can be performed in parallel within the certain stirring time Tstr.

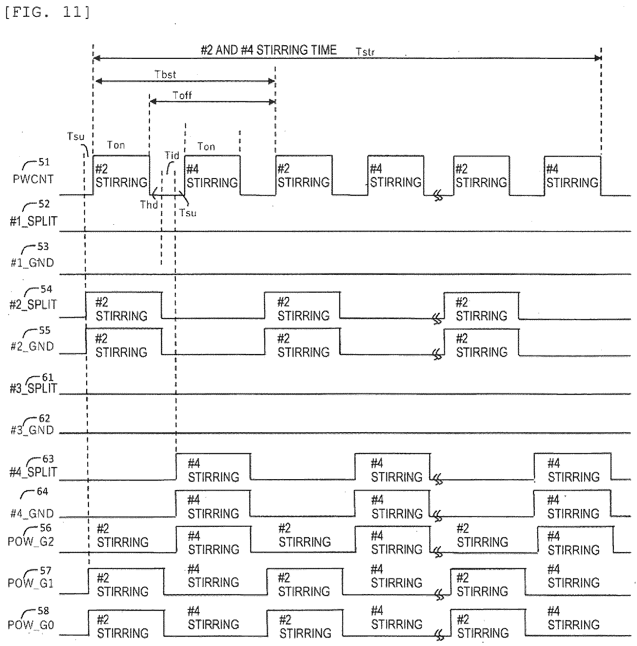

FIG. 11 is a time chart illustrating an operation when the second piezoelectric element and the fourth piezoelectric element are driven within the certain stirring time in the automatic analyzer according to Embodiment 2.

As illustrated in FIG. 11, first, in order to drive only the second piezoelectric element 22, the control unit 4 sets #2_splitting (54) and #2_GND (55) to H, sets #1_splitting (52), #1_GND (53), #3_splitting (61), #3_GND (62), #4_splitting (63), and #4_GND (64) to L, and sets the gain control signals to POW_G2 (56) = L, POW_G1 (57) = H, and POW_G0 (58) = H. In this state, after the setup time Tsu has elapsed, the control unit 4 sets PWCNT (51) to H, causes the amplifier 2 to output the drive voltage, and drives the second piezoelectric element 22.

When the predetermined time Ton has elapsed after PWCNT (51) = H, the control unit 4 sets PWCNT (51) = L. Further, when the hold time Thd has elapsed, the control unit 4 sets #2_splitting (54) and #2_GND (55) to L, and ends the driving of the second piezoelectric element 22.

Thereafter, when the switching idle time Tid has elapsed, the control unit 4 sets the #4_splitting (63) and the #4_GND (64) to H in order to drive only the fourth piezoelectric element 24. Further, when the setup time Tsu has elapsed, the PWCNT (51) is set to H, the drive voltage is output from the amplifier 2, and the fourth piezoelectric element 24 is driven.

When the predetermined time Ton has elapsed after PWCNT (51) = H, the control unit 4 sets PWCNT (51) = L. Further, when the hold time Thd has elapsed, the control unit 4 sets #4_splitting (63) and #4_GND (64) to L, and ends the driving of the fourth piezoelectric element 24.

Thereafter, the second piezoelectric element 22 is driven again, and the similar operation is repeated until the stirring time Tstr is reached. As described above, since both the second piezoelectric element 22 and the fourth piezoelectric element 24 are driven in a time-division manner, the stirring in the second reaction container 32 by the second piezoelectric element 22 and the stirring in the fourth reaction container 34 by the fourth piezoelectric element 24 can be performed in parallel within the certain stirring time Tstr.

### [Embodiment 3]

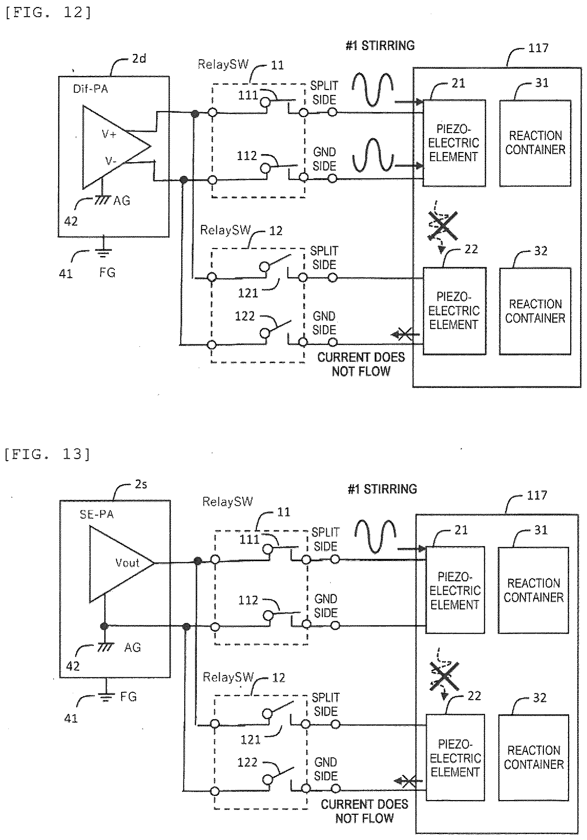

Next, an automatic analyzer according to Embodiment 3 will be described. FIG. 12 is a diagram illustrating a circuit configuration for driving a piezoelectric element of the automatic analyzer according to Embodiment 3 (when only a first piezoelectric element is driven). In Embodiment 3, a differential output amplifier 2d is used as an amplifier, and the piezoelectric element is driven by a differential output signal.

Since the amplitude of a differential output is twice that of a single-ended output, the differential output amplifier 2d is suitable for driving the piezoelectric element. Although the differential output amplifier 2d includes the analog GND terminal 42, similarly to Embodiment 1, current feedback to the analog GND terminal 42 does not occur if the GND-side switch 122 of the second relay switch 12 is turned off when the first piezoelectric element 21 is driven. Further, current feedback to the frame GND terminal 41 does not occur. As a result, it is possible to suppress a decrease in the intensity of the ultrasonic waves.

### [Embodiment 4]

Next, an automatic analyzer according to Embodiment 4 will be described. FIG. 13 is a diagram illustrating a circuit configuration for driving a piezoelectric element of the automatic analyzer according to Embodiment 4 (when only a first piezoelectric element is driven). In Embodiment 4, a single-ended output amplifier 2s is used as an amplifier, and the piezoelectric element is driven by a single-ended output signal.

Although the single-ended output amplifier 2s also includes the analog GND terminal 42, similarly to Embodiment 1, current feedback to the analog GND terminal 42 does not occur if the GND-side switch 122 of the second relay switch 12 is turned off when the first piezoelectric element 21 is driven. Further, current feedback to the frame GND terminal 41 does not occur. As a result, it is possible to suppress a decrease in the intensity of the ultrasonic waves.

The invention is not limited to the embodiments described above, and includes various modifications. For example, the embodiments described above have been described in detail to facilitate understanding of the invention, and the invention is not necessarily limited to those including all the configurations described above. A part of a configuration in one embodiment can be replaced with a configuration in another embodiment, and a configuration in one embodiment can also be added to a configuration in another embodiment. A part of a configuration in each embodiment may be added to, deleted from, or replaced with another configuration.

### Reference Signs List

2: amplifier
2a: first amplifier
2b: second amplifier
2d: differential output amplifier
2s: single-ended output amplifier
4: control unit
10: relay group
11: first relay switch
12: second relay switch
13: third relay switch
14: fourth relay switch
20: piezoelectric element
21: first piezoelectric element
22: second piezoelectric element
23: third piezoelectric element
24: fourth piezoelectric element
30: reaction container
31: first reaction container
32: second reaction container
33: third reaction container
34: fourth reaction container
41: frame GND terminal
42: analog GND terminal
101: sample storage unit
102: reagent storage unit
103: reaction unit
104, 105: stirring unit
106: washing unit
107: sample
108: turntable
110: analysis unit
111, 121, 131, 141: split-side switch
112, 122, 132, 142: GND-side switch
113: sample dispensing mechanism
115: reagent dispensing mechanism
116: reagent
117: thermostatic tank
202: interface unit
203: jig
204: split electrode (positive voltage-side electrode)
205: thermostatic water side electrode (negative voltage-side electrode, GND electrode)
208: thermostatic water
209: reflection plate
211: first vibration plate
221: second vibration plate
231: third vibration plate
241: fourth vibration plate
212, 222, 232, 242: split electrode-side terminal
213, 223, 233, 243: GND electrode-side terminal

## Claims

1. An automatic analyzer comprising:
a piezoelectric element configured to generate ultrasonic waves for stirring a sample and a reagent;
an amplifier configured to drive the piezoelectric element;
a relay switch provided between the piezoelectric element and the amplifier; and
a control unit configured to control the amplifier and the relay switch, wherein
the piezoelectric element includes a first piezoelectric element and a second piezoelectric element,
the relay switch includes a first relay switch provided between the first piezoelectric element and the amplifier, and a second relay switch provided between the second piezoelectric element and the amplifier,
the first relay switch includes a positive voltage-side switch that turns on and off a connection between a positive voltage-side electrode of the first piezoelectric element and the amplifier, and a GND-side switch that turns on and off a connection between a GND electrode of the first piezoelectric element and the amplifier,
the second relay switch includes a positive voltage-side switch that turns on and off a connection between a positive voltage-side electrode of the second piezoelectric element and the amplifier, and a GND-side switch that turns on and off a connection between a GND electrode of the second piezoelectric element and the amplifier,
when the first piezoelectric element is driven, the control unit turns on the positive voltage-side switch and the GND-side switch in the first relay switch, and turns off the positive voltage-side switch and the GND-side switch in the second relay switch, and
when the second piezoelectric element is driven, the control unit turns on the positive voltage-side switch and the GND-side switch in the second relay switch, and turns off the positive voltage-side switch and the GND-side switch in the first relay switch.

2. The automatic analyzer according to claim 1, wherein
the first piezoelectric element and the second piezoelectric element are driven by the common amplifier.

3. The automatic analyzer according to claim 2, wherein
the first piezoelectric element and the second piezoelectric element are driven at a duty ratio of less than 50% for a predetermined time in a time-division manner.

4. The automatic analyzer according to claim 2, wherein
the piezoelectric element includes n piezoelectric elements including the first piezoelectric element and the second piezoelectric element, and after two of the n piezoelectric elements are driven at a duty ratio of less than 50% for a predetermined time in a time division manner,
other two of the n piezoelectric elements are driven at the duty ratio of less than 50% for a predetermined time in the time division manner.

5. The automatic analyzer according to claim 2, wherein
the piezoelectric element includes n piezoelectric elements including the first piezoelectric element and the second piezoelectric element, and at least m of the n piezoelectric elements are driven at a duty ratio of less than 100/m% for a predetermined time in a time division manner.

6. The automatic analyzer according to claim 1 or 2, wherein
the amplifier drives the piezoelectric element by a differential output signal.

7. The automatic analyzer according to claim 1, wherein
the amplifier drives the piezoelectric element by a single-ended output signal.

8. A method for controlling an automatic analyzer, the automatic analyzer including a first piezoelectric element and a second piezoelectric element configured to generate ultrasonic waves for stirring a sample and a reagent, an amplifier configured to drive the first piezoelectric element and the second piezoelectric element, and a control unit configured to control the amplifier, the method comprising:
when the amplifier drives the first piezoelectric element, causing a positive voltage-side electrode and a GND electrode of the first piezoelectric element to be electrically connected to the amplifier and causing a positive voltage-side electrode and a GND electrode of the second piezoelectric element not to be electrically connected to the amplifier by the control unit; and
when the amplifier drives the second piezoelectric element, causing the positive voltage-side electrode and the GND electrode of the second piezoelectric element to be electrically connected to the amplifier and causing the positive voltage-side electrode and the GND electrode of the first piezoelectric element not to be electrically connected to the amplifier by the control unit.

9. The method for controlling the automatic analyzer according to claim 8, wherein
the amplifier drives the first piezoelectric element and the second piezoelectric element at a duty ratioof less than 50% for a predetermined time in a time division manner.

10. The method for controlling the automatic analyzer according to claim 8, wherein
the automatic analyzer includes n piezoelectric elements including the first piezoelectric element and the second piezoelectric element, and
after the amplifier drives two of the n piezoelectric elements at a duty ratio of less than 50% for a predetermined time in a time division manner,
the amplifier drives other two of the n piezoelectric elements at the duty ratio of less than 50% for a predetermined time in the time division manner.

11. The method for controlling the automatic analyzer according to claim 8, wherein
the automatic analyzer includes n piezoelectric elements including the first piezoelectric element and the second piezoelectric element, and
the amplifier drives at least m of the n piezoelectric elements at a duty ratio of less than 100/m% for a predetermined time in a time division manner.
